# EUROPÄISCHE PATENTSCHRIFT

(11) **EP 0 934 866 B1**
(45) Veröffentlichungstag und Bekanntmachung des Hinweises auf die Patenterteilung: **11.09.2002**
(21) Anmeldenummer: 99102098.3
(22) Anmeldetag: 02.02.1999
(51) Int. Cl.: B62D 25/20

(54) **Ladeflächenanordnung für ein Nutzfahrzeug**
Loading surface assembly for commercial vehicle
Dispositif de plate-forme pour un véhicule utilitaire

(30) Priorität: 07.02.1998 DE 19805010
(43) Veröffentlichungstag der Anmeldung: 11.08.1999
(73) Patentinhaber: Schlüter, Berndt, 58644 Iserlohn (DE)
(72) Erfinder: Schlüter, Guido, 58644 Iserlohn (DE)
(74) Vertreter: Schröter & Haverkamp

(56) Entgegenhaltungen:
- GB-A- 649 309
- GB-A- 1 522 301
- US-A- 3 420 192
- US-A- 4 222 606

## Beschreibung

Die Erfindung betrifft eine Ladeflächenanordnung für ein Nutzfahrzeug zum Transport von auf standardisierten Paletten oder in bzw. auf entsprechend standardisierten Transportgestellen befindlichen Gütern, die eine ebene, den oberen Abschluß einer Bodengruppe bildende Ladefläche aufweist, die zur seitlichen Ladungssicherung durch feststehende, in ihrer Längserstreckung parallel zum äußeren Abschluß der Ladefläche angeordnete, von der Ebene der Ladefläche im wesentlichen rechtwinklig nach oben abragend angeordnete, starre Anschläge begrenzt ist.

Ein Transport von palettierten Gütern oder von solchen Gütern, die in bzw. auf anderen Transportgestellen befördert werden, erfolgt durch einen Einsatz von Lastkraftwagen (Zugmaschine, Anhänger oder Auflieger) oder auch von Eisenbahnwaggons. Üblicherweise besteht eine solche Ladeflächenanordnung aus einer oberseitig die Ladefläche bildenden Bodengruppe, die auf einem Fahrgestell aufliegt. Die Bodengruppe wird aus mehreren, parallel zueinander angeordneten Quer- und Längsträgern gebildet, wobei die beiden jeweils außen liegenden Längsträger Teil des Außenrahmens sind. Die obere Oberfläche der Bodengruppe bildet die im wesentlichen ebene Ladefläche aus.

Zur Ladungssicherung können an den äußeren Längsträgern seitlich abklappbare Bordwände angeordnet sein. Zur Ermöglichung des Abklappens der Bordwände sind diese mit Scharnieren an einem seitlichen, dem Außenrahmen zugehörigen Längsträger angelenkt. Damit die Ladefläche eines solchen Fahrzeuges vielseitig verwendbar ist, sind die Bordwände lösbar in den Scharnieren gehalten. Eine solche Bordwand muß, um den üblichen Belastungen, insbesondere ihrer Eigenschaft als Ladungssicherungsmittel gerecht zu werden, entsprechend formstabil ausgebildet sein. Zu diesem Zweck werden beispielsweise Leichtmetallbordwände mit einer entsprechenden Profilierung verwendet.

Aus der GB 695 872 ist eine Ladeflächenanordnung bekannt, bei der zur seitlichen Ladungssicherung anstelle einer abklappbaren Bordwand seitliche, feststehende Anschläge vorgesehen sind. Diese Anschläge bilden quasi eine feststehende Bordwand und sind Teil eines als Außenrahmen vorgesehenen Profiles. Begrenzt wird die Ladefläche bei dieser Ladeflächenanordnung durch einen nach oben abragenden, nach außen geneigten Profilschenkel. Dieser geneigte Profilschenkel geht oberseitig in einen parallel zur Ebene der Ladefläche angeordneten horizontal verlaufenden Schenkel über, an den sich außenseitig ein vertikaler Abschlußschenkel anschließt. Die Schrägstellung des die Ladefläche begrenzenden Profilschenkels dient als Beladungshilfe, so daß ungenau positionierte, auf der Ladefläche abzustellende Transportgestelle, die mit ihrer Unterseite auf dem Schrägschenkel auftreffen an diesem entlang gleiten, so daß ein solches Transportgestell mit seiner äußeren Begrenzung an der sich zwischen dem mit der Ladefläche fluchtenden Bodenschenkel und dem Schrägschenkel ausgebildeten Hohlkehle positioniert ist.

Die Profilierung der Anschlaganordnung dient auch dazu, um dem als Außenrahmen der Bodengruppe vorgesehenen Profil die notwendige Festigkeit und Steifigkeit zu verleihen. Ferner sollen durch diese Ladeflächenanordnung auch solche Transportgüter gegenüber einem Herabrutschen gesichert sein, die nicht unmittelbar an der Anschlaganordnung positioniert waren, sondern sich rutschend auf die Anschlaganordnung zu bewegen, so daß hohe Kräfte durch die Anschlaganordnung aufgenommen werden müssen.

Diese bekannte Ladenflächenanordnung hat jedoch zum Nachteil, daß bei nur niedriger Höhe der Anschlaganordnung (vertikaler Abstand zwischen der Oberseite der Ladefläche und dem oberen Abschluß der Anschlaganordnung), wie dies bei einer Beladung der Ladefläche mit einem Gabelstabler notwendig ist, der schräg gestellte Profilschenkel weder die ihm zugedachte Beladungshilfefunktion noch die Ladungssicherungsfunktion zufriedenstellend ausübt. Die Schrägstellung dieses Schenkels ist in einem solchen Fall so gering, daß eine darauf abgestellte Transportpalette nicht notwendigerweise in die Ebene der Ladefläche herabrutscht. Aufgrund der geringen Höhe des sich an den Schrägschenkel anschließenden horizontalen, den oberen Abschluß der Anschlußanordnung bildenden Schenkels kann eine Transportpalette auch auf diesem Schenkel abgesetzt werden, ohne daß dieses bemerkt werden muß. In beiden Fällen ist eine ausreichende Ladungssicherung nicht gegeben. Aber auch ein an die Hohlkehle der Anschlaganordnung angrenzendes Ladegut ist durch die geringe Schrägneigung des schräggestellten Profilschenkels nicht immer ausreichend gesichert, so daß das Ladegut bei Kurvenfahrten von der Ladefläche herabrutschen kann.

Aus der GB 649 309 ist eine Ladeflächenanordnung mit den Merkmalen des Oberbegriffs des Anspruchs 1 bekannt, die eine aus speziell ausgestalteten Aluminiumprofilen bestehende Bodengruppe umfaßt. Die einzelnen Elemente der Bodengruppe sind miteinander verklammert. In einer Ausgestaltung der in diesem Dokument beschriebenen Bodengruppe sind seitliche Begrenzungsschenkel vorgesehen. Diese Begrenzungsschenkel sind Teil eines etwa T-förmigen Profiles und bilden dort die vertikalen Schenkel. Der horizontale Schenkel weist endseitig einen Nocken auf, mit dem dieser über das Profil in eine Wellenform der Bodengruppe eingreift. Da die Profile der Bodengruppe miteinander verbindbar sind, ist das eine Ende eines solchen Profiles in seiner vertikalen Erstreckung tiefer ausgebildet als das andere.

Nachteilig ist bei diesem Gegenstand, daß die Ladefläche, soweit diese durch die Innenseiten der beiden gegenüberliegenden Anschläge definiert ist, keine einheitliche Ebene ausbildet, da der eine Anschlag mit seinem horizontalen Schenkel über ein Element des Aluminiumprofiles greift, dessen Höhe der eigentlichen Höhe der Ladefläche entspricht. Folglich kann eine Beladung der aus diesem Dokument bekannten Ladeflächenanordnung mit Gütern die in einer Ebene auf der Ladefläche aufstehen sollen, nicht in der vollen möglichen Breite erfolgen. Ein palettiertes Gut, welches auf die Oberseite des horizontalen Schenkels des linken Anschlages aufgesetzt wird, steht schief auf der Ladefläche auf und stellt aufgrund der dann nur geringen Kontaktfläche zwischen der Palette und der Ladefläche ein Gefahrenpotential dar, da entsprechend die Haftreibung verringert ist. Die dargestellten Anschläge sind als Aluminiumprofile entsprechend den übrigen Bestandteilen der Ladefläche ausgebildet, ohne daß eine besondere Verbindung mit dem Träger der Bodengruppe vorgesehen ist. Folglich vermag ein solcher Anschlag auch nicht die notwendigen Rückhaltekräfte zu bieten, um auf der Ladefläche befindliche Güter entsprechend sichern zu können.

Der Gegenstand der US-PS 3 420 192 betrifft eine weitere Ladeflächeanordnung, die als selbsttragender Boden durch Einsatz gekammerter Profile ausgebildet ist. Eine seitliche Ladungsbegrenzung ist bei diesem Gegenstand grundsätzlich nicht vorgesehen. Ziel des Gegenstandes dieses Dokumentes ist es, eine nach Art eines Baukastens aufgebaute Ladefläche für Kastenaufbauten oder dergleichen bereitzustellen. Zu diesem Zweck verwendet der Gegenstand dieses Dokumentes einen mittleren und zwei seitliche Längsträger, die Teil der Bodenkonstruktion sind und an denen Adapterprofile und Bodenplatten angeordnet sind. Weiteres Ziel des Gegenstandes dieses Dokumentes ist es, eine einfache Verbindung der einzelnen Teile untereinander und mit der Unterkonstrukion bereitzustellen. Bei dem nach oben abragenden Schenkel des Adapterprofils handelt es sich ebenso wie bei dem nach oben abragenden Schenkel des seitlichen Längsträgers lediglich um Verbindungsfortsätze, daß die beiden Schenkel ohne weiteres mit Nieten miteinander verbunden werden können, wobei sicherlich die einfache Zugänglichkeit zum Herbeiführen einer solchen Verbindung hier im Vordergrund steht. Zur Ladungssicherung sind diese Schenkel grundsätzlich nicht vorgesehen.

Die zulässige maximale Breite ist ebenso wie die zulässige maximale Länge eines solchen Fahrzeuges vorgeschrieben. Zum Bereitstellen einer möglichst großen nutzbaren Ladebreite einer solchen Ladeflächenanordnung ist die Breite eines solchen Fahrzeuges durch die äußeren Abschlüsse der einander gegenüberliegenden Anschlaganordnungen bestimmt. Die nutzbare Ladebreite ist entsprechend durch den Abstand der inneren, sich zwischen dem der Bodengruppe zuzurechnenden waagerechten Schenkel und dem schräggestellten Schenkel des Außenrahmenprofils bestimmt. In Deutschland beträgt beispielsweise das maximal zulässige Breitenmaß außenseitig 2,55 m. Bei einer Verwendung von klappbaren Bordwänden oder auch bei einer Verwendung einer feststehenden Anschlaganordnung, etwa gemäß der GB 695 872 verbleibt eine nutzbare Ladebreite von etwa 2,48 m. Diese zur Verfügung stehende Ladebreite ist jedoch nicht ausreichend, um bestimmte Transportgestelle, die u. a. für den Eisenbahngüterverkehr genormt sind - sogenannte EU-RO-Norm-Gitterboxen - in einer möglichst Raum ausfüllenden Anordnung auf der Ladefläche eines Nutzfahrzeuges zu verstauen. Diese Gitterboxen sind von ihrer Bemaßung her zu lang, als daß diese zu zweit nebeneinander mit ihren Querseiten aneinandergrenzend auf einer solchen Ladefläche quer zur ihrer Längserstreckung angeordnet werden können. Diese Gitterboxen sind auch zu breit, als das sie in einer Dreieranordnung nebeneinander mit ihren Längsseiten aneinandergrenzend auf einer solchen Ladefläche quer zur ihrer Längserstreckung angeordnet werden können. Die Folge ist, daß beim Transport derartiger Güter ein Teil der Ladefläche und somit des von einem Spediteur bereitgestellten Transportvolumens ungenutzt bleibt.

Ausgehend von der GB 649 309 liegt der Erfindung daher die Aufgabe zugrunde, eine eingangs genannte gattungsgemäße Ladeflächenanordnung bereitzustellen, die um die notwendigen Millimeter bzw. Zentimeter gegenüber vorbekannten Ladeflächen verbreitert ist, um in einer besseren Ladeflächenausnutzung eine größere Anzahl an Paletten oder Gitterboxen transportieren zu können.

Diese Aufgabe wird erfindungsgemäß durch die Merkmale des Patentanspruchs 1 gelöst.

Erstmals ist durch den Gegenstand der Erfindung nunmehr eine Ladeflächenanordnung bekannt geworden, bei der bei einer maximal zulässigen Nutzfahrzeugbreite von 2,55 m die Ladefläche zum Transport von standardisierten Paletten bzw. entsprechend standardisierten Transportgestellen bezüglich der Breite der Ladefläche optimal ausgenutzt ist, wobei diese sowohl mit ihren Querseiten parallel zur Fahrtrichtung in einer Zweieranordnung oder mit ihren Längsseiten parallel zur Fahrtrichtung in einer Dreieranordnung auf der Ladefläche angeordnet sein können. Der Abstand der vom Nutzfahrzeug nach außen weisenden Oberflächen der sich gegenüberliegenden Anschläge entspricht der maximal zulässigen Aufbaubreite des Nutzfahrzeuges. Jeder Anschlag stellt den nach oben abragenden Schenkel eines Profils dar, bei welchem Profil an den Anschlag eine Querseite grenzt, die in der Ebene der Ladefläche und somit horizontal verlaufend angeordnet ist. Diese horizontale Querseite ist von der tragenden Einheit des Außenrahmens - dem vertikalen Anteil des Außenrahmens - nach außen vorspringend ausgebildet, so daß auf diese Weise eine Verbreiterung der Ladefläche vorgenommen ist, ohne daß dabei die tragende Anordnung der Rahmen, insbesondere der Außenrahmen geändert werden müßte. Das Profil mit dem Anschlag und der horizontalen Querseite bildet eine gegenständliche Einheit mit dem Außenrahmen des Nutzfahrzeuges, wobei vorgesehen sein kann, daß dieses Profil Teil des Außenrahmens ist, oder im Falle einer Nachrüstung fest mit dem Außenrahmen, beispielsweise durch Verschweißen verbunden ist. Die Stärke eines Anschlages ist allein durch die Stärke des den Anschlag bildenden Profilschenkels gebildet, so daß die zwischen zwei gegenüberliegenden Anschlägen befindliche Ladebreite maximiert ist.

Die Höhe der Anschlagkante ist so bemessen, daß zwischen der Oberkante der Anschlagkante und der Unterseite einer auf der Ladefläche abzustellenden Gabeltasche einer Palette oder eines Transportgestells ausreichend Abstand ist, daß mit dem notwendigen Spiel die Gabeln eines Gabelstaplers über die Oberkante der Anschlagkante hinweg in die entsprechenden Gabeltaschen eingeführt werden können. Die auf diese Weise auf der Ladeflächenanordnung positionierten Gitterboxen grenzen quasi unmittelbar an die zur Ladefläche weisende Anschlagseite des Anschlages. Aus diesem Grunde braucht die Stabilität des Anschlages grundsätzlich nur solchen Anforderungen genügen, daß die Gitterboxen vor einem Herabrutschen gesichert sind. Heranrutschende Ladegüter braucht ein solcher Anschlag bei einer vollständigen Gitterboxbeladung nicht aufzunehmen. Gleichwohl kann ein solcher Anschlag auch eine solche Stabilität aufweisen, um heranrutschende Güter aufzufangen und vor einem Herabrutschen zu sichern.

Ist vorgesehen, eine solche Ladeflächenanordnung zusätzlich mit einem Planenaufbau zu versehen, ist es zweckmäßig sein, an der einer Anschlagkante gegenüberliegenden, nach unten weisenden Seite des Kastenprofiles einen außenseitig nach unten abragenden Steg zur Festlegung von Seitenplanenspannern anzuordnen. Auf diese Weise läßt sich der Montageaufwand dieser unterschiedlichen Elemente vereinfachen. Bei einer solchen Anordnung ist insbesondere der Einsatz eines T-Profiles zweckmäßig, bei dem der obere Abschnitt des querliegenden Schenkels den Anschlag und der untere Abschnitt des querliegende Schenkels einen Steg zum Festlegen von Seitenplanenspannern bildet.

Zum Abstützen eines Ladeflächenaufbaus sind Rungen vorgesehen, die in entsprechende, der Bodengruppe zugeordnete Rungentaschen einsteckbar sind. Dabei weist die innere Begrenzung einer solchen Rungentasche einen kleineren Abstand zur Mitte der Ladefläche auf als die innere, zur Ladefläche weisende Oberfläche eines benachbarten Anschlages. Besonders zweckmäßig ist es, die zum Abstützen eines solchen Ladeflächenaufbaus eingesetzten Rungen dergestalt anzuordnen, daß an den beiden bezüglich der Längserstreckung der Ladefläche befindlichen Enden jeweils gegenüberliegende Rungenpaare angeordnet sind und daß die Rungen in dem sich zwischen diesen Rungenpaaren erstreckenden Ladeflächenabschnitt versetzt zueinander angeordnet sind. Durch diese versetzte Anordnung wird erreicht, daß die Ladebreite in ihrer gesamten Länge ausreichend breit ist, damit EURO-Norm-Gitterboxen in der oben beschriebenen Zweieranordnung über die gesamte Ladefläche aneinandergrenzend transportierbar sind.

Weitere Vorteile der Erfindung ergeben sich aus der nachfolgenden Beschreibung eines bevorzugten Ausführungsbeispieles. Es zeigen:
- **Fig. 1:**: einen schematisierten Querschnitt durch eine auf einem Sattelauflieger befindliche Ladeflächenanordnung,
- **Fig. 2:**: eine schematisierte Draufsicht auf die Ladeflächenanordnung der Figur 1 und
- **Fig. 3:**: einen vergrößerten Ausschnitt des in Fahrtrichtung vorderen rechten Bereiches der Ladeflächenanordnung der Figur 2.

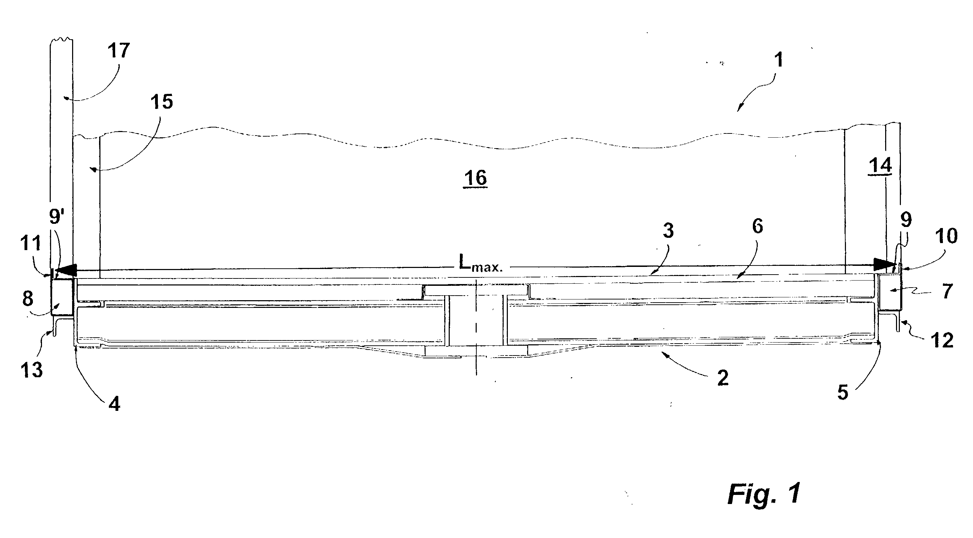

Figur 1 zeigt eine Ladeflächenanordnung 1 umfassend eine Bodengruppe 2, deren oberer Abschluß die Ladefläche 3 bildet. Unterhalb der Bodengruppe 2 befindet sich ein nicht näher dargestelltes Fahrgestell eines Sattelaufliegers. Der Sattelauflieger dient zum Transportieren von palettierten oder in bzw. auf anderen Transportgestellen befindlichen Gütern. Die Bodengruppe 2 besteht aus einem Außenrahmen, von dem die beiden Längsträger 4, 5 in Figur 1 erkennbar sind. Zwischen den Längsträgern 4, 5 ist ein die Bodengruppe 2 oberseitig abschließender Siebdruck-Plattenboden 6 eingesetzt.

Außenseitig ist an jedem Längsträger 4, 5 ein Kastenprofil 7, 8 angeschweißt, dessen obere Querseite 9, 9' bündig mit der Ebene der Ladefläche 3 fluchtend angeordnet ist. Jedes Kastenprofil 7, 8 weist von seiner Außenseite ausgehend und nach oben über die Ebene der Ladefläche 3 abragend einen Anschlagschenkel 10, 11 auf. Der Anschlagschenkel 10, 11 eines in Figur 1 dargestellten Kastenprofils 7, 8 ist durch Ausbilden eines Falzes erstellt, so daß die Dicke eines Anschlagschenkels 10, 11 der doppelten Wandstärke des für ein Kastenprofil 7, 8 verwendeten Materiales entspricht. Die Breite eines Kastenprofiles 7, 8 entspricht etwa der Dicke einer herkömmlichen Bordwand. Durch die erfindungsgemäße Reduzierung der als Ladungssicherungsmittel vorgesehenen Anschläge bzw. Anschlagschenkel 10, 11 auf ein konstruktives Minimum wird deutlich, daß die nutzbare Ladebreite der Ladefläche 3 vergrößert ist. Ausgehend von den für Deutschland gültigen maximalen Fahrzeugbreiten von 2,55 m ist somit die Ladefläche 3 gegenüber herkömmlichen Ladeflächenanordnungen um die entscheidenden Zentimeter verbreitert, damit etwa EURO-Norm-Gitterboxen sowohl in einer Zweieranordnung mit ihren Querseiten aneinandergrenzend als auch in einer Dreieranordnung mit ihren Längsseiten aneinandergrenzend in der Ladebreite der Ladeflächenanordnung 1 angeordnet werden können. Diese maximale Ladebreite ist in den Figuren mit Lₘₐₓ bezeichnet.

An der Außenseite der beiden Längsträger 4, 5 ist zusätzlich jeweils ein nach unten offenes L-Profil 12, 13 angeordnet, wobei der nach unten ragende Schenkel eines L-Profiles 12, 13 zum Festlegen von Seitenplanenspannern vorgesehen sind.

Das in Fahrtrichtung vordere Ende dieser Ladeflächenanordnung 1 wird seitlich durch zwei Volumenrungen 14, 15, zwischen denen die Stirnwand 16 angeordnet ist, begrenzt. Die Volumenrungen 14, 15 dienen mit weiteren Rungen, von denen in Figur 1 eine Runge 17 dargestellt ist, zum Abstützen eines nicht näher dargestellten Planenaufbaus.

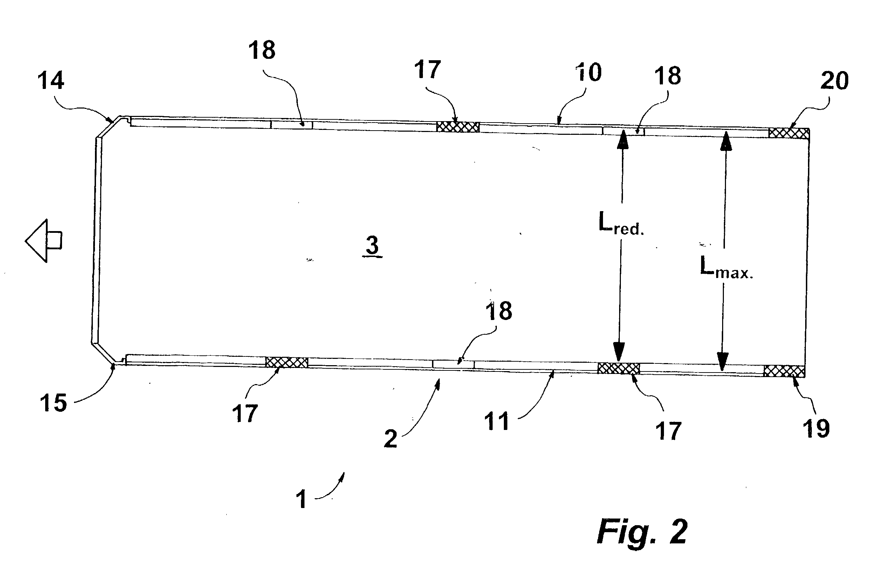

Zum Positionieren der Rungen sind, wie in Figur 2 dargestellt, Rungentaschen 18 der Bodengruppe 2 zugeordnet, in welche die Rungen, so auch die Runge 17 zum Abstützen eines nicht näher dargestellten Planenausbaus eingesetzt werden können. In Figur 2 sind die in die Rungentaschen 18 eingesetzten Rungen 17, die sich zwischen dem Volumenrungenpaar 14, 15 und einem am hinteren Ende der Ladefläche 3 angeordneten Rungenpaar 19, 20 befinden, versetzt zueinander bezogen auf die Längserstreckung der Ladeflächenanordnung 1 angeordnet. Da die Rungen 17, 19, 20 naturgemäß eine größere Stärke aufweisen als die Anschlagschenkel 10, 11 wird die maximale Ladebreite Lₘₐₓ der Ladefläche 3 an denjenigen Stellen, an den die Rungen 17 angeordnet sind, auf eine reduzierte maximale Ladebreite L_{red} verringert. Mit Ausnahme des zwischen den Rungen 19, 20 befindlichen Laderaumes beträgt die Ladebreite der gesamten übrigen Ladefläche 3 durchgängig zumindest der reduzierten maximalen Ladebreite L_{red}, welche Ladebreite ausreicht, damit zwei EURO-Norm-Gitterboxen in dieser Ladebreite angeordnet werden können.

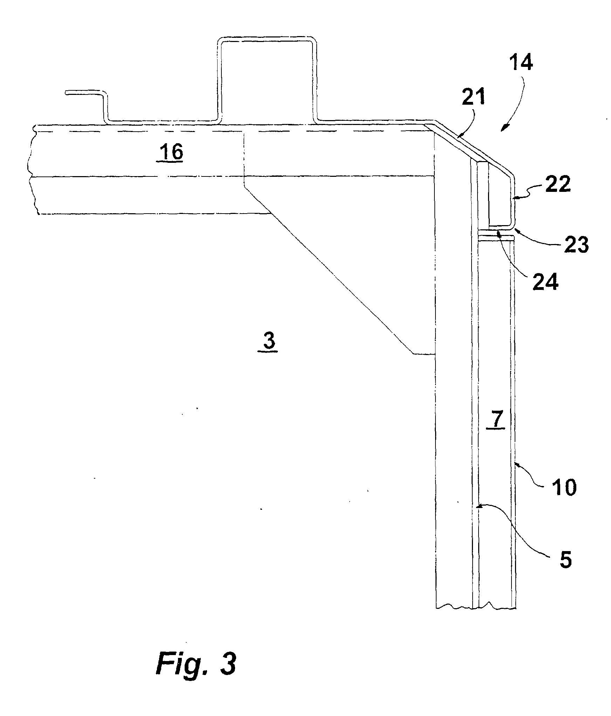

Die Fahrtrichtung des Sattelaufliegers ist durch den in Figur 2 gezeigten Pfeil gekennzeichnet. Der Bereich der vorderen Volumenrunge 14 ist vergrößert in Figur 3 zur Verdeutlichung der Ausbildung der beiden Volumenrungen 14, 15 am Beispiel der Volumenrunge 14 verdeutlicht. Die Volumenrunge 14 ist Teil eines Profiles und umfaßt einen bezüglich der Fahrtrichtung schräggestellten Schenkel 21, der mit seiner einen Seite an die Stirnwand 16 grenzt. Mit seiner anderen Seite grenzt der Schrägschenkel 21 an einen Seitenschenkel 22, der parallel zur Längserstreckung der Ladefläche 3 bzw. zur Längserstreckung des Längsträgers 5 angeordnet ist. Der Seitenschenkel 22 ist zur Bildung einer Versteifungskante 23 nach innen zur Ladefläche 3 weisend umgebogen. Die Länge des Versteifungssteges 24 ist so bemessen, daß die zwischen den sich gegenüberliegenden Enden der Versteifungsstege 24 der Volumenrungen 14 und 15 die Ladebreite der reduzierten maximalen Ladebreite L_{red} entspricht, so daß auch der zwischen den Volumenrungen 14, 15 befindliche Raum der Ladefläche 3 gegenüber herkömmlichen Volumenrungen vergrößert ist.

Aus der Beschreibung der Erfindung wird deutlich, daß mit der beschriebenen Ladeflächenanordnung 1 die maximale Ladebreite eines Nutzfahrzeuges mit begrenzter Fahrzeugbreite nicht nur hinsichtlich von zu transportierenden EURO-Norm-Gitterboxen um die entscheidenden Zentimeter verbreitert ist, sondern daß die Ausbildung der Ladungssicherungsmittel verglichen mit vorbekannten Ladungssicherungsmitteln eine nicht unerhebliche konstruktive Vereinfachung darstellt.

### Zusammenstellung der Bezugszeichen

- 1: Ladeflächenanordnung
- 2: Bodengruppe
- 3: Ladefläche
- 4: Außenrahmen, Längsträger
- 5: Außenrahmen, Längsträger
- 6: Siebdruck-Plattenboden
- 7: Kastenprofil
- 8: Kastenprofil
- 9, 9': Querseite
- 10: Anschlagschenkel
- 11: Anschlagschenkel
- 12: L-Profil
- 13: L-Profil
- 14: Volumenrunge
- 15: Volumenrunge
- 16: Stirnwand
- 17: Runge
- 18: Rungentasche
- 19: Runge
- 20: Runge
- 21: Schrägschenkel
- 22: Seitenschenkel
- 23: Versteifungskante
- 24: Versteifungssteg

- Lₘₐₓ: Maximale Ladebreite
- L_{red}: Reduzierte maximale Ladebreite

## Patentansprüche

1. Ladeflächenanordnung für ein Nutzfahrzeug zum Transport von auf standardisierten Paletten oder in bzw. auf entsprechend standardisierten Transportgestellen befindlichen Gütern, die eine ebene, den oberen Abschluß einer Bodengruppe (2) bildende Ladefläche (3) aufweist, die zur seitlichen Ladungssicherung durch feststehende, in ihrer Längserstreckung parallel zum äußeren Abschluß der Ladefläche (3) angeordnete, von der Ebene der Ladefläche (3) im wesentlichen rechtwinklig nach oben abragend angeordnete, starre Anschläge (10, 11) begrenzt ist,
wobei der Abstand der vom Nutzfahrzeug nach außen weisenden Oberflächen der sich bezüglich der Längsachse der Ladefläche (3) gegenüberliegenden Anschläge (10, 11) der zulässigen Aufbaubreite des Nutzfahrzeugs entspricht
und jeder Anschlag (10, 11) durch den nach oben abragenden Schenkel eines Profils (7, 8) gebildet ist,
wobei die zur Ladefläche (3) weisende Anschlagfläche eines Anschlages(10, 11) allein durch die Stärke des den Anschlag (10, 11)bildendenProfilschenkels von der äußeren, von der Ladefläche (3) wegweisenden Oberfläche des Anschlages (10, 11) beabstandet ist, **dadurch gekennzeichnet,**
**daß** das Profil (7,8) eine an den Anschlag (10, 11) grenzende, in der Ebene der Ladefläche (3) angeordnete und mit der Oberseite der Bodengruppe (2) fluchtende, von der tragenden Einheit des Außenrahmens (4, 5) nach außen vorspringende Querseite (9, 9') aufweist, und dieses Profil eine gegenständliche Einheit mit dem Außenrahmen (4, 5) des Nutzfahrzeuges bildet und
**daß** der vertikale Abstand zwischen dem oberen Abschluß eines Anschlages (10, 11) und der Oberseite der Ladefläche (3) geringer ist als die Höhe einer Gabeltasche einer Palette oder eines Transportsgestells.

2. Ladeflächenanordnung nach Anspruch 1, **dadurch gekennzeichnet, daß** als Anschlag (10, 11) der Schenkel jeweils eines der Bodengruppe (2) der Ladeflächenanordnung (1) zugeordneten Profils (7, 8) vorgesehen ist.

3. Ladeflächenanordnung nach Anspruch 2, **dadurch gekennzeichnet, daß** der Anschlag (10, 11) der nach oben abragende Schenkel eines außenseitig am Außenrahmen (4, 5) der Bodengruppe (2) angeordneten Profils (7, 8) ist.

4. Ladeflächenanordnung nach Anspruch 3, **dadurch gekennzeichnet, daß** das Profil ein Kastenprofil (7, 8) ist, dessen obere Querseite (9, 9') mit der Ebene der Ladefläche (3) fluchtend angeordnet ist.

5. Ladeflächenanordnung nach Anspruch 4, **dadurch gekennzeichnet, daß** an der dem Anschlagschenkel (10, 11) gegenüberliegenden, nach unten weisenden Seite des Kastenprofils (7, 8) ein nach unten abragender Steg (12, 13) zum Festlegen von Seitenplanenspannern angeordnet ist.

6. Ladeflächenanordnung nach einem der Ansprüche 1 bis 5, **dadurch gekennzeichnet, daß** in Richtung der Längserstreckung eines Anschlages (10, 11) Rungentaschen (18) in der Bodengruppe (2) angeordnet sind, wobei die innere, zur Ladefläche (3) weisende Oberfläche eines Anschlages (10, 11) einen größeren Abstand zur Längsachse der Ladefläche (3) aufweist als die innere Begrenzung einer Rungentasche (18).

7. Ladeflächenanordnung nach Anspruch 6, **dadurch gekennzeichnet, daß** zum Abstützen eines Ladeflächenaufbaus in die Rungentaschen (18) den Ladeflächenaufbau tragende Rungen (17) eingesetzt sind, wobei die Rungen (17), ausgehend von jeweils zwei sich gegenüberliegenden, an den bezüglich der Längserstreckung der Ladefläche (3) befindlichen Enden angeordneten Rungenpaaren (14, 15; 19, 20) in dem sich zwischen diesen Rungenpaaren (14, 15; 19, 20) erstreckenden Ladeflächenabschnitt versetzt zueinander angeordnet sind.

8. Ladeflächenanordnung nach Anspruch 7, **dadurch gekennzeichnet, daß** der Ladefläche (3) zwei sich bezüglich der Längserstrekkung der Ladefläche (3) gegenüberliegende Volumenrungen (14, 15) zugeordnet sind, welche Volumenrungen (14, 15) jeweils einen bezüglich der Ladefläche (3) schräggestellten Schenkel (21) aufweisen, dessen eine Seite an die die Ladefläche (3) frontseitig begrenzende Stirnwand (16) und dessen andere Seite an einen Seitenschenkel (22) grenzt, der parallel zur Längserstreckung der Ladefläche (3) angeordnet ist, wobei an dem Seitenschenkel (22) im Bereich seines dem Schrägschenkel (21) gegenüberliegenden Endes ein nach innen zur Ladefläche (3) ragender Versteifungssteg (24) angeordnet ist, dessen nach innen vorspringende Länge vor der inneren Begrenzung einer Rungentasche (18) endet.

## Claims

1. Loading area assembly for a commercial vehicle for transporting articles situated on standardised pallets or in or respectively on suitably standardised transportable frames, which assembly includes a flat loading area (3), which forms the upper termination of a substructure (2) and is defined, to prevent lateral loading, by stationary, rigid stop members (10, 11), which are disposed in respect of their longitudinal extension parallel to the external termination of the loading area (3) and are disposed so as to protrude substantially at right angles upwardly from the plane of the loading area (3),
wherein the spacing between the surfaces, which point outwardly from the commercial vehicle, of the stop members (10, 11), which are situated opposite each other with respect to the longitudinal axis of the loading area (3), corresponds to the permissible structural width of the commercial vehicle, and each stop member (10, 11) is formed by the upwardly protruding portion of a profile (7,8), and
wherein the stop face of a stop member (10, 11), pointing towards the loading area (3), is spaced from the external surface of the stop member (10, 11), which points away from the loading area (3), solely because of the thickness of the profile portion forming the stop member (10, 11),
**characterised in that** the profile (7, 8) has a transverse side (9, 9') which butts against the stop member (10, 11), is disposed in the plane of the loading area (3), is in alignment with the upper side of the substructure (2) and protrudes outwardly from the carrying unit of the external frame (4, 5), and said profile forms a substantive unit with the external frame (4, 5) of the commercial vehicle, and **in that** the vertical spacing between the upper termination of a stop member (10, 11), and the upper side of the loading area (3) is shorter than the height of a fork-lift recess of a pallet or of a transportable frame.

2. Loading area assembly according to claim 1, **characterised in that** the portion of a respective profile (7, 8), associated with the substructure (2) of the loading area assembly (1), is provided as the stop member (10, 11).

3. Loading area assembly according to claim 2, **characterised in that** the stop member (10, 11) is the upwardly protruding portion of a profile (7, 8), which is disposed on the outside of the external frame (4, 5) of the substructure (2).

4. Loading area assembly according to claim 3, **characterised in that** the profile is a box-shaped profile (7, 8), the upper transverse side (9, 9') of which is disposed so as to be in alignment with the plane of the loading area (3).

5. Loading area assembly according to claim 4, **characterised in that** a downwardly protruding web (12, 13) for securing lateral tarpaulin tensioners is disposed on the downwardly pointing side of the box-shaped profile (7, 8) situated opposite the stop member portion (10, 11).

6. Loading area assembly according to one of claims 1 to 5, **characterised in that**, when viewed with respect to the direction of the longitudinal extension of a stop member (10, 11), post cavities (18) are disposed in the substructure (2), the internal surface of a stop member (10, 11), pointing towards the loading area (3), having a greater spacing from the longitudinal axis of the loading area (3) than the internal boundary of a post cavity (18).

7. Loading area assembly according to claim 6, **characterised in that**, to support a loading area structure, posts (17) which carry the loading area structure are inserted into the post cavities (18), the posts (17), starting from two respective oppositely situated pairs of posts (14, 15; 19, 20) disposed at the ends situated with respect to the longitudinal extension of the loading area (3), being disposed in the loading area portion, which extends between these pairs of posts (14, 15; 19, 20), so as to be offset from each other

8. Loading area assembly according to claim 7, **characterised in that** the loading area (3) has associated therewith two volume posts (14, 15), which are situated opposite each other with respect to the longitudinal extension of the loading area (3), which volume posts (14, 15) each have a portion (21), which is inclined relative to the loading area (3), one side of said portion abutting against the end wall (16), which defines the loading area (3) at the front end, and the other side of said portion abutting against a lateral portion (22), which is disposed parallel to the longitudinal extension of the loading area (3), a reinforcing web (24) being disposed on the lateral portion (22) in the region of its end situated opposite the inclined portion (21), said reinforcing web protruding inwardly towards the loading area (3), and the inwardly protruding length of said reinforcing web terminating in front of the internal boundary of a post cavity (18).

## Revendications

1. Dispositif de plate-forme pour un véhicule utilitaire, destiné à transporter des marchandises sur des palettes standardisées voire dans ou sur d'autres châssis de transport normés, qui présente une surface de chargement (3) plane constituant l'élément supérieur d'un ensemble au sol (2), délimitée par des butées (10, 11) fixes, rigides, parallèles par leur axe longitudinal à l'extrémité extérieure de la surface de chargement (3), en saillie vers le haut, essentiellement perpendiculaires au plan de la surface de chargement (3), visant à sécuriser le chargement, sachant que l'intervalle des surfaces des butées (10, 11) se faisant face, butées (10, 11) orientées vers l'extérieur du véhicule utilitaire, correspond à la largeur maximale utile de construction du véhicule utilitaire et que chaque butée (10, 11) est un montant de profilé (7, 8), en saillie vers le haut, sachant que la surface de contact d'une butée (10, 11) orientée vers la surface de chargement (3) est uniquement séparée de la surface de butée (10, 11) extérieure, orientée à l'opposé de la surface de chargement (3), par l'épaisseur du montant profilé formant la butée (10, 11), **caractérisé en ce que** le profilé (7, 8) présente contre la butée (10, 11), sur le plan de la surface de chargement (3) et alignée avec la face supérieure de l'ensemble au sol (2), une largeur en saillie vers l'extérieur par rapport à l'unité porteuse du cadre extérieur (4, 5), et que ce profilé forme une unité concrète avec le cadre extérieur (4, 5) du véhicule utilitaire et que l'intervalle vertical entre l'extrémité supérieure d'une butée (10, 11) et la face supérieure de la surface de chargement (3) est plus faible que la hauteur du passage de fourches d'une palette ou d'un châssis de transport.

2. Dispositif de plate-forme selon la revendication 1, **caractérisé en ce que** le montant d'un profilé (7, 8) affecté à l'ensemble au sol (2) d'un dispositif de plate-forme (1) est prévu pour faire office de butée (10, 11).

3. Dispositif de plate-forme selon la revendication 2, **caractérisé en ce que** la butée (10, 11) est le montant en saillie vers le haut d'un profilé (7, 8) disposé sur la face extérieure du cadre extérieur (4, 5) de l'ensemble au sol (2).

4. Dispositif de plate-forme selon la revendication 3, **caractérisé en ce que** le profilé est un profilé de caisse (7, 8) dont la largeur supérieure (9, 9') est disposée de manière alignée avec le plan de la surface de chargement (3).

5. Dispositif de plate-forme selon la revendication 4, **caractérisé en ce que** est disposée sur le côté orienté vers le bas d'un profilé de caisse (7, 8) côté opposé au montant de butée (10, 11), une traverse (12, 13) en saillie vers le bas, destinée à fixer les tendeurs de bâches latérales.

6. Dispositif de plate-forme selon l'une des revendications 1 à 5, **caractérisé en ce que** sont disposés des logements de ridelles (18) dans l'ensemble au sol (2) dans le sens de l'axe longitudinal d'une butée (10, 11), sachant que la surface intérieure, orientée vers la surface de chargement (3) d'une butée (10, 11) présente un intervalle plus grand par rapport à l'axe longitudinal de la surface de chargement (3) que la limitation intérieure d'un logement de ridelle (18).

7. Dispositif de plate-forme selon la revendication 6, **caractérisé en ce que** l'on utilise, pour renforcer la construction de la plate-forme, des ridelles (17) supportant la structure de la plate-forme, fichées dans les logements de ridelles (18), sachant que les ridelles (17) partant de deux paires de ridelles (14, 15 ; 19, 20) se faisant face, disposées aux extrémités de la surface de chargement (3), sont placées en quinconce sur cette section de plate-forme s'étendant entre ces paires de ridelles (14, 15 ; 19, 20).

8. Dispositif de plate-forme selon la revendication 7, **caractérisé en ce que** la surface de chargement (3) est munie de deux ridelles volumiques (14, 15) qui se font face si l'on considère l'axe longitudinal de la surface de chargement (3), lesquelles ridelles volumiques (14, 15) présentent chacune un montant (21) incliné par rapport à la surface de chargement (3) dont un côté avoisine la paroi avant (16) délimitant l'avant de la surface de chargement (3) et dont l'autre côté avoisine un montant latéral (22) parallèle à l'axe longitudinal de la surface de chargement (3) sachant que le montant latéral (22) comporte au niveau de son extrémité opposée à son montant latéral (21) une traverse de raidissement (24) recourbée vers l'intérieur, orientée vers la surface de chargement (3) dont la partie recourbée vers l'intérieur se termine avant la limite intérieure d'un logement de ridelle (18).
